# FASCICULE DE BREVET EUROPEEN

(11) **EP 1 947 310 B1**
(45) Date de publication et mention de la délivrance du brevet: **11.03.2015**
(21) Numéro de dépôt: 08100403.8
(22) Date de dépôt: 14.01.2008
(51) Int. Cl.: F02C 7/232

(54) **Injecteur de carburant a deux étages**
Zweistufen-Brennstoffeinspritzer
Two-stage fuel injector

(30) Priorité: 22.01.2007 FR 0752804
(43) Date de publication de la demande: 23.07.2008
(73) Titulaire: SNECMA, 75015 Paris (FR)
(72) Inventeur: Rodrigues, José Roland, 77176 Nandy (FR); Tiepel, Alain, 77720 Bombon (FR)
(74) Mandataire: Ilgart, Jean-Christophe

(56) Documents cités:
- FR-A1- 2 832 492
- GB-A- 2 134 244
- US-A- 3 662 959

## Description

Le sujet de cette invention est un injecteur de carburant à deux étages équipant les chambres à combustion de turbine à gaz.

Il perfectionne des dispositifs tels que celui du brevet français 2 832 492 dont la structure et le fonctionnement peuvent être résumés comme suit. Deux soupapes sont disposées en série dans une douille extérieure de l'injecteur et rappelées séparément par des ressorts respectifs à des positions de fermeture. Le carburant refoulé dans l'injecteur par une pompe passe par un filtre et pèse sur la première soupape, qui est une soupape primaire tarée par un ressort faible. Une pression modérée suffit donc à l'ouvrir, et le carburant la franchit puis s'écoule par un chemin primaire qui le mène hors de l'injecteur. Le chemin primaire comprend une portion annulaire entre la douille extérieure et un corps interne dans lequel l'autre soupape ou soupape secondaire est logée de façon coulissante. Le carburant pèse aussi sur la soupape secondaire, qui est tarée avec un ressort beaucoup plus fort que le précédent. Elle reste donc immobile jusqu'à une pression supérieure à celle qui est nécessaire pour déplacer la soupape primaire et ouvrir le chemin primaire de carburant ; mais quand elle a été déplacée elle aussi, il s'ouvre un chemin secondaire de carburant bifurquant du chemin primaire et traversant la soupape secondaire. Le débit de carburant délivré par l'injecteur est alors augmenté grâce au débit supplémentaire qui s'écoule par ce chemin secondaire de carburant. On recourt à cet écoulement secondaire dans certains régimes du moteur dans lequel l'injecteur est employé.

On cherche ici à enrichir le mélange délivré par l'injecteur, c'est-à-dire augmenter le débit de carburant, mais dans le régime d'écoulement primaire seulement. Cet enrichissement pourra être demandé afin d'améliorer les capacités d'allumage en vol à haute altitude et aussi au sol. Il concernera seulement certains des injecteurs du moteur. On sera donc tenté de modifier des injecteurs existants plutôt que de recourir à une conception complètement nouvelle ou à un modèle différent ; il sera en particulier avantageux que l'injecteur recherché soit identique à l'injecteur existant pour les parties régissant l'écoulement secondaire.

Selon l'invention, on y parvient au moyen d'un injecteur de carburant à deux étages comprenant deux soupapes disposées en série et rappelés vers des positions de fermeture, dont une soupape primaire disposée sur un chemin primaire de carburant et une soupape secondaire disposée sur un chemin secondaire de carburant, le chemin primaire et le chemin secondaire de carburant bifurquant en aval de la soupape primaire, et un corps interne dans lequel la soupape secondaire coulisse et qui délimite le chemin primaire, le chemin secondaire comprenant un creux central de la soupape secondaire et au moins une lumière traversant radialement la soupape secondaire entre sa périphérie et le creux central, caractérisé en ce qu'il comprend au moins un orifice traversant le corps interne entre le chemin primaire de carburant et la soupape secondaire et débouchant dans la lumière quand la soupape secondaire est dans la position de fermeture.

Afin de réaliser parfaitement l'enrichissement seulement de l'écoulement primaire seul, il est avantageux que l'orifice traversant le corps interne débouche dans une portion extrême de la lumière, dans un sens vers l'amont du chemin secondaire du carburant.

Dans un bon nombre d'injecteurs usuels, le perçage de l'orifice produira cependant un débit primaire excessif. Il sera alors utile de remplacer, sur une partie de sa longueur, la portion annulaire du chemin primaire d'écoulement par un autre orifice qui pourra être calibré au diamètre nécessaire.

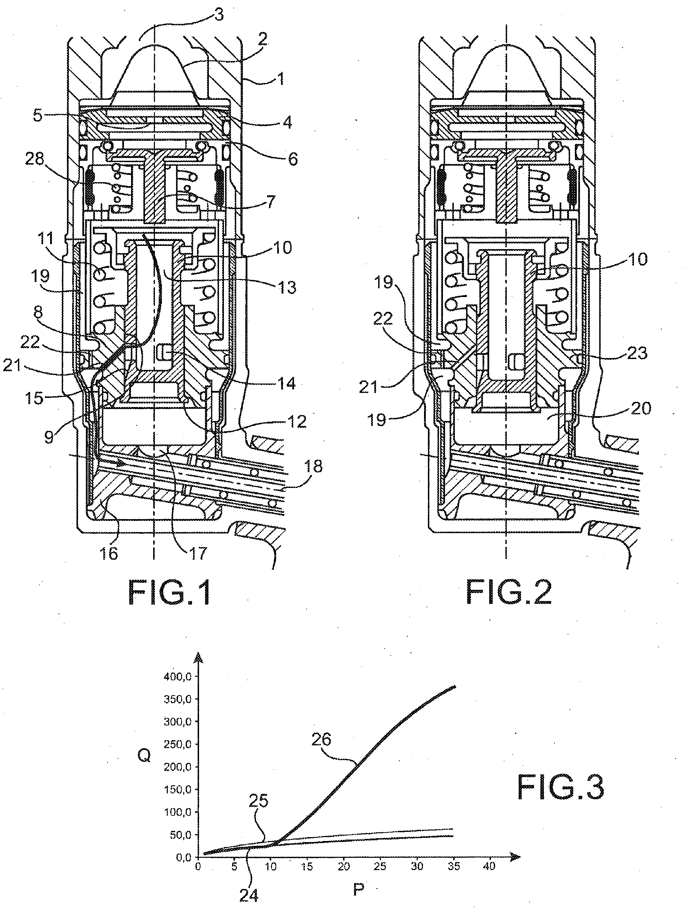

L'invention sera maintenant décrite en liaison aux figures 1 et 2, qui représentent un injecteur conforme à l'invention dans des états d'écoulement primaire seul et d'écoulement secondaire respectivement.

L'injecteur des figures 1 et 2 comprend une douille extérieure 1 cylindrique, évidée de part en part entre ses deux faces d'extrémité. Elle contient à l'amont un filtre de carburant 2 en crépine et s'ouvre par un orifice 3 d'introduction de carburant. Le filtre de carburant 2 s'appuie sur un diaphragme 4 à orifice central 5 destiné à régulariser le débit de carburant contre les variations de dimensions provenant de la fabrication, selon l'enseignement du brevet français 2 832 492 déjà cité au début de ce texte. Un siège 6 d'appui d'une soupape primaire 7 s'étend plus en aval dans la douille extérieur 1. Un ressort 28 faible rappelle la soupape primaire 7 contre le siège 6 vers l'amont de l'injecteur. Quand la force du ressort 8 est vaincue par la pression du carburant, la soupape primaire 7 s'enfonce vers l'aval, et laisse passer le carburant autour d'elle.

La douille extérieure 1 comprend encore un corps interne 8 muni d'un perçage 9 dans lequel coulisse une soupape secondaire 10 qu'un ressort 11 fort rappelle vers l'amont jusqu'à une position de butée, qui peut être produite par une collerette 12 de la soupape secondaire 10 située en aval et s'appuyant contre une portion de siège correspondante du corps interne 8. La soupape secondaire 10 comporte un creux central 13 qui ne la traverse cependant pas, et des lumières 14 d'orientation radiale faisant communiquer le creux central 13 avec la surface périphérique de la soupape secondaire 10 et qui débouchent devant la paroi du perçage 9 du corps interne 8. Des fentes 15 sont fraisées sur la soupape secondaire 10 de manière à étendre les lumières 14 vers l'aval afin de donner le débit de carburant voulu en régime secondaire en fonction de sa pression et de l'enfoncement de la soupape secondaire 10.

L'aval de l'injecteur comprend un système de conduits concentriques dont l'extrémité pénètre dans la douille extérieure 1. Un corps aval 16 y est logé et se raccorde au corps interne 8 déjà mentionné. Le corps aval 16 est percé d'un conduit secondaire d'évacuation 17 du carburant, au centre duquel est établi un conduit primaire d'évacuation 18 du carburant.

Le carburant ayant dépassé la soupape primaire 7 emprunte un chemin primaire d'écoulement passant autour de la soupape primaire 7 puis autour du corps interne 8, dans une fente annulaire 19 comprise entre celui-ci et la douille extérieure 1, puis autour du corps aval 16 dans un prolongement de cette fente et finissant dans le conduit primaire d'évacuation 18. Le carburant circule aussi autour de la soupape secondaire 10 et dans son creux central 13, et il pèse sur elle, mais la déplace seulement quand il a atteint une pression plus forte. L'état de la figure 2 est alors atteint : les lumières 14 ou les fentes 15 atteignent le bout du perçage 9 du corps interne 10 et il s'ouvre un circuit d'écoulement secondaire établi à travers le creux central 13, les lumières 14 et les fentes 15, et une chambre 20 formée par le corps aval 16 sous le corps interne 8 ; le carburant accède enfin au conduit secondaire d'écoulement 17.

Nous abordons maintenant les éléments caractéristiques de l'invention. Un orifice 21 est percé à travers le corps interne 8 et s'étend d'une des lumières 14 à la fente annulaire 19 à l'état de la figure 1. Le chemin primaire d'écoulement du carburant comprend donc une bifurcation qui emprunte le creux central 13 et l'orifice 21 et procure l'enrichissement recherché à ce régime. Il faut souligner que l'orifice 21 débouche immédiatement en aval d'une portion pleine de la soupape secondaire 10 dans cette position où elle repose sur son siège. Ainsi, comme le montre bien la figure 2, l'orifice 21 est obturé par la soupape secondaire 10 dès qu'elle se déplace à l'établissement de l'écoulement secondaire, de sorte que l'enrichissement cesse alors.

Contrairement à une conception antérieure, la fente annulaire 19 est interrompue par une collerette 23 du corps interne 8 qui s'étend jusqu'à la douille extérieure 1 ; le chemin primaire d'écoulement du carburant est rétabli par un orifice 22 traversant cette collerette 23 et joignant les deux portions de la fente annulaire 19 ; il est possible de le calibrer à un diamètre très précis, tout comme l'orifice 21, de manière à maîtriser parfaitement le débit primaire du carburant.

La figure 3 illustre la courbe de débit qu'on obtient en fonction de la pression du carburant, avec une première portion 24 représentative du débit d'écoulement en régime primaire obtenu avec l'injection connu, une deuxième portion 25 représentative du débit primaire obtenu avec l'injecteur de l'invention, et une portion 26 obtenue en régime d'écoulement secondaire et qui, selon l'objectif de l'invention, est identique pour le nouvel injecteur et pour l'ancien.

## Revendications

1. Injecteur de carburant à deux étages, comprenant deux soupapes (7, 10) disposées en série et rappelées vers des positions de fermeture, dont une soupape primaire (7) disposée sur un chemin primaire de carburant et une soupape secondaire (10) disposée sur un chemin secondaire de carburant, le chemin primaire et le chemin secondaire de carburant bifurquant en aval de la soupape primaire (7), et un corps interne (8) dans lequel la soupape secondaire coulisse et qui délimite le chemin primaire (19), le chemin secondaire comprenant un creux central (13) de la soupape secondaire et au moins une lumière (14) traversant radialement la soupape secondaire (10) entre une périphérie et le creux central, **caractérisé en ce qu'**il comprend au moins un orifice (21) traversant le corps interne entre le chemin primaire (19) de carburant et la soupape secondaire et débouchant dans la lumière (14) quand la soupape secondaire (10) est dans la position de fermeture.

2. Injecteur de carburant à deux étages selon la revendication 1, **caractérisé en ce que** l'orifice (21) traversant le corps interne (8) débouche dans une portion extrême de la lumière, dans un sens vers l'amont du chemin secondaire du carburant.

3. Injecteur de carburant à deux étages selon l'une quelconque des revendications 1 ou 2, **caractérisé en ce que** le circuit primaire comprend au moins un orifice (22) traversant une collerette (23) du corps interne (8) qui s'étend jusqu'à une douille (1) périphérique de l'injecteur.

4. Chambre de combustion équipée d'au moins un ajusteur suivant la revendication 1.

5. Turbine à gaz comportant une chambre de combustion suivant la revendication 4.

## Patentansprüche

1. Zweistufiger Treibstoffinjektor, umfassend zwei Ventile (7, 10), die in Reihe angeordnet sind und in Schließstellungen rückgestellt werden, darunter ein Primärventil (7), das auf einem Primärtreibstoffweg angeordnet ist, und ein Sekundärventil (10), das auf einem Sekundärtreibstoffweg angeordnet ist, wobei der Primärweg und der Sekundärweg des Treibstoffs sich nach dem Primärventil (7) gabeln, sowie einen Innenkörper (8), in dem das Sekundärventil gleitet und der den Primärweg (19) begrenzt, wobei der Sekundärweg einen mittleren Hohlraum (13) des Sekundärventils und wenigstens ein Fenster (14), welches das Sekundärventil (10) zwischen einem Umfang und dem mittleren Hohlraum radial durchquert, umfasst, **dadurch gekennzeichnet, dass** er wenigstens eine Öffnung (21) umfasst, welche den Innenkörper zwischen dem Primärtreibstoffweg (19) und dem Sekundärventil durchquert und in das Fenster (14) mündet, wenn das Sekundärventil (10) sich in der Schließstellung befindet.

2. Zweistufiger Treibstoffinjektor nach Anspruch 1, **dadurch gekennzeichnet, dass** die den Innenkörper (8) durchquerende Öffnung (21) in einer Richtung stromaufwärts des Sekundärweges des Treibstoffs in einen Endabschnitt des Fensters mündet.

3. Zweistufiger Treibstoffinjektor nach einem der Ansprüche 1 oder 2, **dadurch gekennzeichnet, dass** der Primärkreis wenigstens eine Öffnung (22) umfasst, die einen Kragen (23) des Innenkörpers (8) durchquert, der sich bis zu einer Umfangshülse (1) des Injektors erstreckt.

4. Brennkammer, die mit wenigstens einem Justierer nach Anspruch 1 ausgestattet ist.

5. Gasturbine, die eine Brennkammer nach Anspruch 4 umfasst.

## Claims

1. Two-stage fuel injector comprising two valves (7, 10) arranged in series and biased towards closed positions, namely a primary valve (7) arranged on a primary fuel path and a secondary valve (10) arranged on a secondary fuel path, the primary fuel path and the secondary fuel path branching downstream of the primary valve (7), and an inner body (8) in which the secondary valve slides and which delimits the primary path (19), the secondary path comprising a central cavity (13) of the secondary valve and at least one hole (14) passing radially through the secondary valve (10) between a periphery and the central cavity, **characterized in that** it comprises at least one orifice (21) passing through the inner body between the primary fuel path (19) and the secondary valve and opening into the hole (14) when the secondary valve (10) is in the closed position.

2. Two-stage fuel injector according to claim 1, **characterized in that** the orifice (21) passing through the inner body (8) opens into an end portion of the hole, in a direction towards the upstream end of the secondary fuel path.

3. Two-stage fuel injector according to either one of claims 1 or 2, **characterized in that** the primary circuit comprises at least one orifice (22) passing through a collar (23) of the inner body (8) which extends as far as a peripheral bushing (1) of the injector.

4. Combustion chamber equipped with at least one adjuster according to claim 1.

5. Gas turbine comprising a combustion chamber according to claim 4.
